(19) Europäisches Patentamt / European Patent Office / Office européen des brevets

(11) **EP 4 325 398 A1**

(12) **EUROPEAN PATENT APPLICATION**

(43) Date of publication:
**21.02.2024 Bulletin 2024/08**

(21) Application number: **23190910.2**

(22) Date of filing: **10.08.2023**

(51) International Patent Classification (IPC):
*G06N 3/098* (2023.01)    *G06N 3/02* (2006.01)
*G06N 20/00* (2019.01)    *G06F 21/60* (2013.01)

(52) Cooperative Patent Classification (CPC):
**G06N 20/00; G06N 3/02; G06N 3/098;** G06F 21/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 US 202263371334 P
16.09.2022 US 202263375984 P
28.03.2023 US 202318191583**

(71) Applicant: **Devron Corporation
New York, NY 10005 (US)**

(72) Inventors:
• WAGH, Sameer
  New York, 10005 (US)
• CHOPRA, Kartik
  New York, 10005 (US)
• ROY, Sidhartha
  New York, 10005 (US)
• PATHAK, Shashank
  New York, 10005 (US)
• SINGH, Nanaki Kuljot
  New York, 10005 (US)

(74) Representative: **Mewburn Ellis LLP
Aurora Building
Counterslip
Bristol BS1 6BX (GB)**

(54) **VERTICAL FEDERATED LEARNING PLATFORM AND METHODS FOR USING SAME**

(57)    Provided herein are systems and methods for vertical federated machine learning. Vertical federated machine learning can be performed by a central system communicatively coupled to a plurality of satellite systems. The central system can receive encrypted data from the satellite systems and apply a transformation that transforms the encrypted data into transformed data. The central system can identify matching values in the transformed data and generate a set of location indices that indicate one or more matching values in the transformed data. The central system can transmit instructions to the satellite systems to access data stored at locations indicated by the location indices and to train a machine learning model using data associated with said locations.

FIG. 1

EP 4 325 398 A1

## Description

**CROSS-REFERENCE TO RELATED APPLICATIONS**

This application claims priority to U.S. Provisional Application No. 63/371,334, filed August 12, 2022, U.S. Provisional Application No. 63/375,984, filed September 16, 2022, and U.S. Application No. 18/191,583, filed March 28, 2023 the entire contents of each of which are incorporated herein by reference.

**FIELD**

The present disclosure relates generally to vertical federated machine learning, and more specifically to vertical federated machine learning methods using federated datasets with differing data schema to build and train global machine learning models.

**BACKGROUND**

Federated machine learning is a machine learning technique that enables the development of machine learning models based on training data that is not stored in a centralized location. Instead, the machine learning model is trained via a machine learning algorithm based on data that is distributed across multiple federated devices. Various federated learning algorithms can be implemented based on the type of data stored by the federated devices. One type of federated learning is horizontal federated learning (also referred to as homogenous federated learning), which is applicable when the federated devices store data records pertaining to the same entities with the same data categories (also called attributes or features).

Vertical federated learning (also referred to as heterogeneous federated learning) is applicable when federated datasets contain data pertaining to some of the same entities, but contain distinct data categories (e.g., the datasets have distinct data schema). For instance, a first federated dataset can include financial information about numerous individuals (entities) including the following data categories: each individual's annual income, bank balance, and monthly expenses. A second federated dataset can include financial information about some of the same individuals (e.g., the same entities) but include a different combination of data categories: monthly income, savings account balance, and loan balance. In this example, the first federated dataset and the second federated dataset include different information about some of the same entities (the same individuals), which can be used for valuable analytics when combined.

**SUMMARY**

As stated above, vertical federated learning enables global machine learning models to be trained based on data that is distributed across multiple federated devices according to different data schemas. Using federated datasets for federated learning implicates two opposing objectives. First, providing enough information about the values of the federated dataset to enable a data scientist to utilize that data for analysis, and second providing as little information about the values of the federated dataset as possible to preserve data privacy. With respect to vertical federated learning, creating a federated model using datasets with different data schema can be difficult without accessing the data values themselves to identify data corresponding to the same entity across datasets. Accordingly, it can be impossible to build a vertical learning model using data stored in a private network where it is unknown what raw data is stored in the network. Thus, there is a need for systems and methods for building and training vertical learning models with training data located at various federated locations without direct access to the data. Accordingly, disclosed herein are systems and methods that may address the above-identified need.

Disclosed herein are methods and systems for building and training a machine learning model based on data siloed across various satellite sites that is stored according to a variety of data schemas. Disclosed herein are methods for building and training a vertical federated learning model via a central authority without directly accessing or receiving the raw data stored at the satellite sites. The satellite sites can encrypt some or all of the satellite site's local dataset and convey that encrypted data to a central authority. The central authority can apply a transformation to the encrypted data received from the satellite systems to generate transformed data that enables the central authority to identify data records corresponding to the same entities in the underlying datasets. After identifying data corresponding to the same entities, the central authority can generate a set of location indices for each satellite system that indicates where in the local dataset the satellite system contains data corresponding to the same entities as other satellite systems. The central authority can then transmit instructions to the satellite systems to access data stored at the locations indicated by the sets of location indices and to train a machine learning model using data associated with said locations (such as the related data values in the same row (those related to a single entity), and/or all of the data of the satellite system). As noted above, using data values from distinct datasets that correspond to the same entity as data values stored at other datasets (e.g., related data values), enables more robust data analytics to be performed. By identifying such related data values without directly accessing the raw data and enabling federated learning using those extracted and encrypted data categories, the systems and methods disclosed herein can enable vertical federated learning without accessing the raw data of the federated satellite systems.

In some embodiments, a computer-implemented method for vertical federated machine learning is provided, the method performed by a central system communicatively coupled to a plurality of satellite systems, the method comprising: receiving, at the central system, first encrypted data based on a first dataset, wherein the first dataset is at a first satellite system; receiving, at the central system, second encrypted data based on a second dataset, wherein the second dataset is at a second satellite system; applying a first transformation to the first encrypted data to generate first transformed data; applying a second transformation to the second encrypted data to generate second transformed data; identifying one or more matching values in the first and second transformed data; generating a first set of location indices indicating one or more matching values in the first transformed data; generating a second set of location indices indicating one or more matching values in the second transformed data; transmitting instructions to the first satellite system to train a first local machine learning model using data of the first dataset that is associated with the first set of location indices; and transmitting instructions to the second satellite system to train a second local machine learning model using data of the second dataset that is associated with the second set of location indices.

In some embodiments, the method comprises: receiving, at the central system, first update data from the first satellite system and second update data from the second satellite system; and training a global model using the first update data and the second update data.

In some embodiments, the method comprises executing the global model to generate one or more predictions.

In some embodiments, the one or more predictions are generated in real time as new data is added to one or more of the first dataset and the second dataset.

In some embodiments, global model is trained using one of a neural network model, a clustering model, an encoder-decoder model, a decision tree model, a random forests model, a supervised machine learning model, and an unsupervised machine learning model.

In some embodiments, the first update data and the second update data are based on the first local machine learning model trained at the first satellite system and the second local machine learning model trained at the second satellite system, respectively.

In some embodiments, the first update data corresponds to a portion of data values of the first dataset that were trained using the first local machine learning model.

In some embodiments, the first update data and the second update data comprise encrypted data values.

In some embodiments, the instructions transmitted to the first satellite system and the second satellite system comprise instructions to train each of the first local machine learning model and the second local machine learning model using one or more data values stored at the locations in the first dataset and the second dataset that are indicated by the first set of location indices and the second set of location indices, respectively.

In some embodiments, the instructions transmitted to the first satellite system and the second satellite system comprise instructions to train each of the first local machine learning model and the second local machine learning model using one or more data values that are related to the data stored at the locations in the first dataset and the second dataset indicated by the first set of location indices and the second set of location indices, respectively.

In some embodiments, the instructions transmitted to the first satellite system and the second satellite system comprise instructions to train each of the first local machine learning model and the second local machine learning model using one of a neural network model, a clustering model, an encoder-decoder model, a decision tree model, and a random forests model.

In some embodiments, the first encrypted data corresponds to one or more data categories of the first dataset that contain personally identifying information (PII).

In some embodiments, the first encrypted data corresponds to one or more unique data categories of the first dataset that contain information that identifies a corresponding one or more entities of the first dataset.

In some embodiments, the first dataset and the second dataset comprise one or more of financial data, medical data, and biographical data.

In some embodiments, the first dataset and the second dataset store data according to different data schemas.

In some embodiments, the first dataset and the second dataset store data in one or more tables.

In some embodiments, applying the first transformation to the first encrypted data comprises applying a first transformation key to the first encrypted data, and wherein the first transformation key comprises a private random value known to a key management system and a random value corresponding to the first satellite system.

In some embodiments, applying the second transformation to the second encrypted data comprises applying a second transformation key to the second encrypted data, and wherein the second transformation key comprises the private random value and a random value corresponding to the second satellite system.

In some embodiments, the first transformation key and the second transformation key transform the first encrypted data and second encrypted data according to a deterministic encryption scheme.

In some embodiments, the first transformation key comprises an additive nonce that is added to data values of the first encrypted data.

In some embodiments, the first encrypted data is encrypted using a pseudorandom generator.

In some embodiments, a computing system for vertical federated machine learning is provided, the system comprising: a central system communicatively coupled to a plurality of satellite systems; and one or more processors coupled to one or more memory devices, wherein the one or more memory devices include instructions which when executed by the one or more processors cause the system to: receive, at the central system, first encrypted data based on a first dataset, wherein the first dataset is at a first satellite system; receive, at the central system, second encrypted data based on a second dataset, wherein the second dataset is at a second satellite system; apply a first transformation to the first encrypted data to generate first transformed data; apply a second transformation to the second encrypted data to generate second transformed data; identify one or more matching values in the first and second transformed data; generate a first set of location indices indicating one or more matching values in the first transformed data; generate a second set of location indices indicating one or more matching values in the second transformed data; transmit instructions to the first satellite system to train a first local machine learning model using data of the first dataset that is associated with the first set of location indices; and transmit instructions to the second satellite system to train a second local machine learning model using data of the second dataset that is associated with the second set of location indices.

In some embodiments, a computer-readable medium that stores instructions for vertical federated machine learning is provided, wherein the instructions, when executed by a computing system, cause the system to: receive, at a central system of the computing system, first encrypted data based on a first dataset, wherein the first dataset is at a first satellite system; receive, at the central system, second encrypted data based on a second dataset, wherein the second dataset is at a second satellite system; apply a first transformation to the first encrypted data to generate first transformed data; apply a second transformation to the second encrypted data to generate second transformed data; identify one or more matching values in the first and second transformed data; generate a first set of location indices indicating one or more matching values in the first transformed data; generate a second set of location indices indicating one or more matching values in the second transformed data; transmit instructions to the first satellite system to train a first local machine learning model using data of the first dataset that is associated with the first set of location indices; and transmit instructions to the second satellite system to train a second local machine learning model using data of the second dataset that is associated with the second set of location indices.

Any one or more features of any of the embodiments described above may be combined, in whole or in part, with one another and/or with any one or more features of any embodiment described elsewhere herein.

Additional advantages will be readily apparent to those skilled in the art from the following detailed description. The aspects and descriptions herein are to be regarded as illustrative in nature and not restrictive.

All publications, including patent documents, scientific articles and databases, referred to in this application are incorporated by reference in their entirety for all purposes to the same extent as if each individual publication were individually incorporated by reference. If a definition set forth herein is contrary to or otherwise inconsistent with a definition set forth in the patents, applications, published applications and other publications that are herein incorporated by reference, the definition set forth herein prevails over the definition that is incorporated herein by reference.

## BRIEF DESCRIPTION OF THE FIGURES

Various aspects of the disclosed methods and systems are set forth with particularity in the appended claims. A better understanding of the features and advantages of the disclosed methods and systems will be obtained by reference to the following detailed description of illustrative embodiments and the accompanying drawings, of which:

FIG. 1 depicts a system for federated machine learning, in accordance with one or more examples;

FIG. 2 depicts a method for vertical federated machine learning as performed by a central authority, in accordance with one or more examples;

FIG. 3 depicts a method for processing satellite system datasets in preparation for vertical federated learning.

FIG. 4 depicts a user interface screen for a user of a device associated with a satellite system to privatize data associated with that satellite site, in accordance with one or more examples;

FIG. 5 depicts a user interface screen for a user of a device associated with a satellite system to anonymize data associated with that satellite site, in accordance with one or more examples;

FIG. 6 depicts a user interface screen for a user of a device associated with a satellite system to manage data settings for data associated with that satellite, in accordance with one or more examples;

FIG. 7 depicts a user interface screen for a user of a device associated with a satellite system to manage encryption settings for data associated with that satellite site before using that data for federated machine learning, in accordance with one or more examples; and

FIG. 8 depicts a computing device in accordance with some embodiments.

## DETAILED DESCRIPTION

Described herein are systems and methods for building and training a machine learning model using federated datasets that store data records according to differing data schema. A central authority (CA) computing system can identify related data records (e.g., data records corresponding to the same entity) in datasets arranged according to differing data schema. In one or more examples, the CA computing system applies a transformation function to encrypted datasets received by the satellite systems and identifies related data records in the transformed data as well as the location indices within each dataset that correspond to the data values of those related data records. The CA computing system can convey the location indices for each individual satellite system to that respective satellite system and transmit instructions for training a machine learning model using data of the satellite system, all without receiving the raw data from the satellite system. The machine learning model can be trained locally at each satellite system and then aggregated into a global model at the central authority.

The following description is presented to enable a person of ordinary skill in the art to make and use the various embodiments. Descriptions of specific devices, techniques, and applications are provided only as examples. Various modifications to the examples described herein will be readily apparent to those of ordinary skill in the art, and the general principles defined herein may be applied to other examples and applications without departing from the spirit and scope of the various embodiments. Thus, the various embodiments are not intended to be limited to the examples described herein and shown, but are accorded the scope consistent with the claims.

### Model Building System

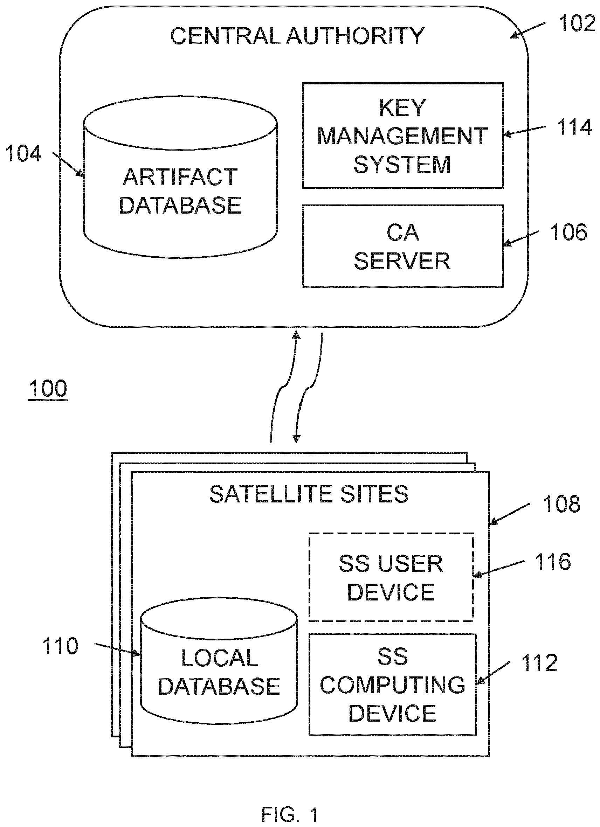

FIG. 1 illustrates a system 100 for federated machine learning, according to one or more examples. As shown, system 100 may include central authority 102 and a plurality of satellite sites 108. As described in detail herein, central authority 102 may be configured to communicate (e.g., by one or more wired or wireless network communication protocols and/or interface(s)) with the plurality of satellite sites 108 in order to exchange information to build and train a machine learning model. In some embodiments, machine learning models as described herein may be configured to perform supervised learning tasks and/or unsupervised learning tasks, and the models may include neural networks, encoder-decoder models, random forest based models, and/or any other suitable machine learning model type.

Central authority 102 may include any computerized system configured to communicate with a plurality of satellite sites 108 and to execute one or more processes to build and train a machine learning model and/or extract analytics in conjunction with said satellite sites 108. Central authority 102 may include one or more processors, such as central authority server 106. Central authority 102 may include any suitable computer storage medium, such as artifact database 104, configured to store analytics artifacts usable to train and build machine learning models as described herein. Central authority 102 may include a key management system 114 for storing a plurality of transformation keys associated with each of the satellite sites 108 to be used to decrypt encrypted information, as will be described below.

The plurality of satellite sites 108 each may include any computerized system configured to communicate with central authority 102 to build and train a machine learning in conjunction with central authority 102. As shown, a satellite site 108 may include a respective set of one or more processors, such as satellite site computing device 112. Additionally, a satellite site 108 may include a respective computer storage medium, such as local database 110, configured to store local data usable to train and build machine learning models as described herein.

The local database 110 of each satellite site 108 stores data according to a data schema. As used herein, a data schema corresponds to the organization and structure of a database of information. In one or more examples, the data schema of a first satellite site 108 differs from the data schema of a second satellite site 108. When the system 100 includes satellite sites 108 that store data according to differing data schema, the CA server 106 cannot generate a horizontal federated learning model and must instead rely on vertical federated learning. Optionally, the local database 110 of each satellite site 108 stores data in one or more tables. A table can include data records tabulated in the rows of the table, with each row containing a data record corresponding to an entity, and columns corresponding to data categories or attributes of the entity. For example, a data record in a row of a table may correspond to a person named John Doe. The columns of the table may include certain attributes such as "Name," "Address," and "Profession," for each entity.

Optionally, a satellite site 108 can include a satellite site (SS) user device 116 for a user to participate in building a global machine learning model. The SS user device 116 can be used to specify which data values of data stored in the local database 110 should remain private or be encrypted, such as data that contains personally identifiable information (PII).

In FIG. 1, detailed components of one exemplary satellite site 108 are shown, though it should be understood that any one or more of the plurality of satellite sites 108 may include the same or similar corresponding components. In some embodiments, system 100 may be configured such that a satellite site 108 can be connected to and disconnected from central authority 102, for example in response to a user instruction or automatically in response to one or more trigger conditions, together with or independently from one or more of the other satellite sites 108.

In some embodiments, satellite sites 108 can be distributed across multiple geographic locations, multiple different organizations, and/or multiple departments within the same organization. In some embodiments, satellite sites may be located geographically proximate to one another (including, even, by being provided as a part of the same computer system) while being communicatively demarcated from one another (e.g., such that they cannot communicate directly with one another). In some embodiments, SS computing device 112 may include a cloud-based server and/or a bare-metal server. The data stored in the local database 110 of the satellite sites 108 can be private data that cannot be shared with other satellite sites 108. The satellite sites 108 can be associated with any number of institutions, such as banks, hospitals, companies, etc.

The key management system 114 manages the cryptographic aspects of the machine learning process. The key management system 114 can receive job initiation requests. The key management system 114 stores a plurality of transformation and encryption keys and communicates those keys to the appropriate processors. The key management system 114 is communicatively connected to the SS computing device 112 of the satellite sites 108 and to the CA server 106 of the central authority 102. Upon receiving a job request, the key management system 114 can communicate the required keys to execute that job to the necessary processing devices, as will be discussed below.

In one or more examples, each of the central authority 102, the key management system 114, and each satellite system 108 can utilize an independent virtual private cloud (VPC). Utilizing independent VPCs for each component of system 100 provides increased security for the information stored at each of those components by enacting a digital barrier and trust boundary between them. Each component of system 100 can implement authentication barriers, firewalls, and strong network security policies such that only authenticated individuals (for instance by supplying appropriate credentials) can interact with components of the system 100. In one or more examples, a data scientist interacting with the system 100 via the CA server 106 and/or a user interacting with the system 100 via a SS user device 116 must input credentials supplied by an identity access system (such as Amazon Cognito) to access system 100, which can eliminate the need for shared credentials and control permission access such that users and/or data scientists have access only to the necessary aspects of system 100 (e.g., control with principle of least privilege).

Additionally, secure data transmission protocols can be implemented between each of the central authority 102, the key management system 114, and each satellite system 108. For instance, secure point-to-point communication channels can connect each of the components, which can encrypt all data in transit between components. System 100 can be configured such that each satellite system 108 of a plurality of satellite systems is communicatively connected only to a local device (e.g., SS computing device 112), the central authority 102, and the key management system 114. Accordingly, the individual satellite systems 108 may not be connected to one another in any way.

***Vertical Federated Learning***

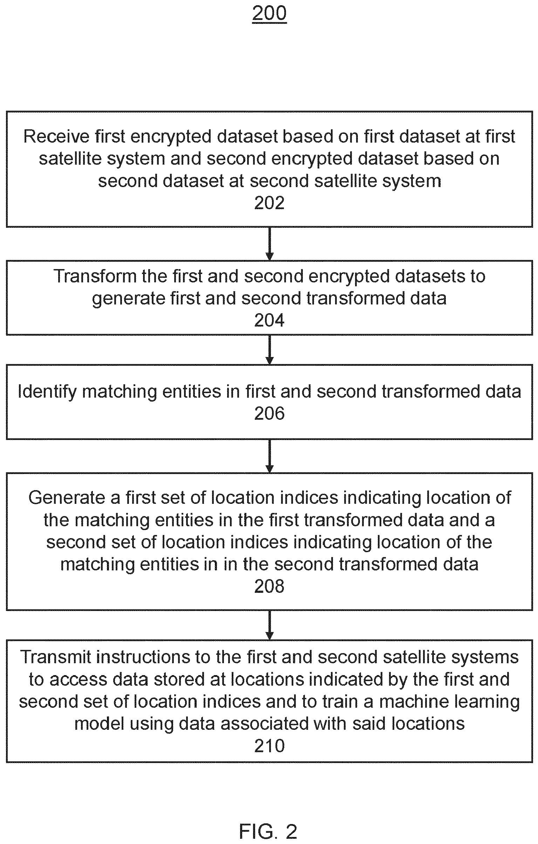

FIG. 2 depicts a method 200 for vertical federated machine learning in accordance with one or more examples. The method 200 may be performed at a central authority of a system for federated machine learning, such as the central authority 102 of system 100 of FIG. 1, and may work in conjunction with a plurality of satellite systems, such as the satellite sites 108 of FIG. 1. As explained below, the method 200 is implemented using data from two satellite systems, however, the method 200 can be implemented using more than two satellite systems in the same manner.

In one or more examples, the method 200 begins at block 202, wherein the central authority may receive a first encrypted dataset based on a first dataset at a first satellite system and a second encrypted dataset based on a second dataset at a second satellite system. As noted above, when relying on private federated datasets for federated learning, maintaining appropriate security of the raw data is a paramount concern. Accordingly, by receiving encrypted data at block 202, the method 200 can receive information necessary for vertical federated learning without transferring raw data from the first satellite system. In some embodiments, the first data set and/or second data set may include financial data, medical data, biographical data, and/or any tabular data.

In one or more examples, the encrypted datasets received at block 202 can each include a category of data from the first dataset and second dataset of the first satellite system and second satellite system, respectively, that contains PII. For instance, both the first dataset and the second dataset may include a category of data titled "Name" that contains a number of data values (e.g., entries) such as John Doe, Will Smith, Sophia King, etc., that each occupy an index location within the data category (e.g., John Doe occupies space 0, Will Smith occupies space 1, etc.). The encrypted datasets received by the central authority can each include those "Name" categories from each satellite system, in an encrypted format.

In one or more examples, the encrypted dataset associated with each satellite site contains a single data category containing PII. The data category may have been flagged as containing PII or other sensitive information by a user of the satellite system (such as via a computing device of the satellite site like the SS user device 116 of FIG. 1). The encrypted dataset may include data values from a "key" or unique data category, which includes a data category that includes unique data values in each row and can be used to identify data values related to a data record or combination of data records. For instance, the data category of social security number contains unique values, each of which can be used to identify other data values related to a particular entity. Optionally, the encrypted dataset can include more than a single data category such as all data categories, 50% of the data categories, etc. Optionally, the encrypted dataset can include any number of data categories that do not contain PII.

In one or more examples, the central authority may relay instructions to the satellite site (e.g., an algorithm) to identify data categories containing PII. Optionally, the central authority transmits one or more pipelines that include instructions for automating the machine learning model building and model training processes. For example, the central authority may transmit a pipeline that includes instructions for each satellite site to identify and/or encrypt certain data categories of the data stored at the satellite site. The infrastructure necessary for pipeline orchestration can include cloud compute infrastructure and/or bare-metal servers. As used herein, the term pipeline may refer to a set of instructions and procedures for processing and exchanging data in order to collectively develop and train a machine learning model.

In one or more examples, the central authority transmits instructions to the satellite sites to identify related data values among datasets of the satellite sites prior to encrypting data. Related data values can include data values that are related to a common entity, which is a real world object. For instance, the name, address, industry, etc., all corresponding to a particular company. Optionally, identifying related data values among data sets can include identifying exact matches, wherein a certain data value exists in multiple datasets. For example, the first dataset of the first satellite system can contain the name "John Doe" in the category "Names" and the second dataset of the second satellite system can contain the name "John Doe" in the category "Full Names," which are exact matches. Optionally, identifying related data values among data sets can include identifying near matches (also called "fuzzy" matches). For instance, "John Doe" may be a near match to "Johnny Doe" or "john doe." Optionally, prior to encrypting data, the satellite site removes duplicate data values in the data category. Optionally, a data scientist at the central authority identifies common data values among datasets based on synthetic data generated to represent the dataset of the satellite systems, as will be discussed below.

In one or more examples, the datasets are encrypted locally at each satellite site before being received by the central authority at block 202. Each satellite site can encrypt the dataset using a pseudorandom generator (PRG) to generate blinding keys that effectively encrypt the data of that satellite. An exemplary encrypted version of a dataset can include a randomized string of characters in place of each data category. The PRG used by the satellite sites can be shared between the satellite sites and a key management system (KMS) (such as the key management system 114 of FIG. 1) of the central authority. For example, the first satellite site can generate a blinding key ($r_i$) to encrypt data values of a category according to the below equation:

$$Enc(([a_1, a_2, ..., a_n] + x) \cdot r_i)$$

wherein $[a_1, a_2, ..., a_n]$ corresponds to a vector containing the data values of the category of data being encrypted, x is a global nonce known to the KMS of the central authority and to the satellite systems, and $r_i$ is the blinding key of the specific satellite system encrypting the dataset.

In one or more examples, the satellite sites encrypt their local dataset according to instructions provided by the KMS of the central authority (such as by executing an algorithm in a training pipeline provided by the central authority). The KMS may generate keys according to an RSA cryptosystem. In one or more examples, the KMS generates a pair of numbers, (n, e) that make up the public key of the system, generates a plurality of blinding keys using a PRG that is shared with each of the individual satellite systems, and generates one global key (e.g., the global nonce) using a PRG. The KMS may transmit instructions to the satellite systems to use the public key (n,e) along with the global nonce and pairwise blinding to encrypt a unique dataset associated with local data of the satellite system and to store that unique encrypted dataset locally before transmitting the encrypted dataset to the central authority.

At block 204, in one or more examples, the central authority may transform the first and second encrypted datasets to generate first and second transformed data. When the central authority receives the encrypted datasets, the KMS may generate a private random value r and apply the following transformation key to each encrypted dataset received from the satellite systems:

$$Enc(r \cdot r_i^{-1})$$

In one or more examples, a number of custom transformation keys will be generated via the KMS that each correspond to one of the satellite systems but are applied to each encrypted dataset in a uniform manner according to a deterministic encryption scheme. That is, the custom transformation keys can generate the same ciphertext for a given plaintext. For instance, if both the first and second transformed datasets contain the same plaintext data category (encrypted by the key of the respective first and second satellite systems), the transformation key can produce the same ciphertext for each dataset, even when performing the transformation on the encrypted datasets.

In one or more examples, the transformation keys can include an additive nonce to prevent leakage due to zero values or other side channel attacks. For example, the transformation key can encrypt each value *a* (at any satellite) according to the following encryption:

$$Enc((a + x) \cdot r_i)$$

wherein *a* represents the column of information being transformed, *x* is a global nonce known to the KMS and the satellites, and *r* is the private random value known only to the KMS, for each satellite site. Accordingly, the transformation keys can provide deterministic encryption while maintaining the privacy of the raw data values of each dataset.

In one or more examples, the transformation keys utilize partially homomorphic encryption (PHE) to transform the encrypted datasets, such that only select functions can be performed on the encrypted values. For example, only text matching may be performed to search for matching values. Optionally, the central authority can utilize other algorithms such as hashing and/or random binning, which can be computationally efficient when transforming and matching over large datasets. In one or more examples, if there are target variables for a machine learning algorithm, the central authority can transfer these target variables from one satellite system to one or more other satellite systems.

At block 206, in one or more examples, the central authority may identify matching values in the first and second transformed data. As noted above, the transformation key applied when transforming the first and second encrypted datasets to generate first and second transformed data can deterministically generate the same ciphertext for common encrypted values. Accordingly, identifying matching values at block 208 can involve identifying matching ciphertext in the first and second transformed data. For instance, the central authority can perform a string search to identify matching strings of text, thereby identifying common data values in the underlying first dataset and second dataset corresponding to the first transformed data and second transformed data, respectively.

At block 208, in one or more examples, the central authority may generate a first set of location indices indicating the location of the matching values in the first transformed data and a second set of location indices indicating the location of the matching values in the second transformed data. For instance, if the first transformed dataset contains 5 values, those five values each are located at one of the following five indices: [0,1,2,3,4], and if the first and third values in that dataset were identified as related to data values in the second transformed data, then the first set of location indices is [0,2]. In one or more examples, the order of index locations in the first set of location indices corresponds to the matching values in the second set of location indices. For example, if value located at [0] in the first transformed data matches the value located at [4] in the second transformed data and the value located at [2] in the first transformed data matches the value located at [1] in the second transformed data, the first set of location indices can be [0,2] and the second set of location indices can be [4,1].

Block 202 through block 208 of method 200 may be referred to as an alignment routine, which generally involves "aligning" the first dataset of the first satellite system and the second dataset of the second satellite system to identify data values that are related to one another in the respective datasets. More specifically, aligning datasets can include linking data records and/or data values of a first dataset to related data records and/or data values of a second dataset. Executing an alignment routine enables executing a federated machine learning training algorithm using datasets that store data according to different data schemas. Generally, the alignment routine can identify the presence of related data records at each satellite system without transmitting the values of the data values used to perform the alignment. For instance, alignment enables finding common social security numbers across two satellite systems without revealing the actual social security numbers.

At block 210, in one or more examples, the central authority may transmit instructions to the first and second satellite systems to train local machine learning models using data of the first dataset of the first satellite system and the second dataset of the second satellite system that is associated with the first set and second set of location indices. In some embodiments, a satellite site may train and/or apply one or more respective local machine learning models. As noted above, the data stored at locations indicated by the location indices generated at block 208 corresponds to related data values across the datasets stored at the first and second satellite systems. Accordingly, when using data associated with said locations for training a machine learning model, the method 200 enables performing data analytics using data from more than just one satellite system. According to some embodiments, a data scientist of the central authority can orchestrate a federated machine learning process by designing one or more pipelines that include instructions for automating the machine learning model building and model training processes. Accordingly, transmitting instructions at block 210 can involve transmitting one or more pipelines to the satellite systems.

In one or more examples, the machine learning model is trained using one or more data values associated with the data stored at locations indicated by the sets of location indices generated at block 208. The data values that are associated with said locations may be those data values themselves, or data values that are related to those data values. For instance, the first dataset of the first satellite system may include a number of categories of data in addition to the "Name" category that was encrypted and sent to the central authority to be transformed and used to identify matching values. The other data categories of the first dataset can include other data values that correspond to the same data record (e.g. correspond to the same entity, and/or contained in the same row of the dataset). For instance, the data categories of the first dataset can include the following: "Name," "Age," and "Education Level," and each of those categories can include data values that correspond to the same data record (e.g., correspond to the same entity as one another). For an individual named "John Doe," the corresponding data values for the data categories of "Age" and "Education Level" can be age 29 and education level "Masters." Accordingly, training the machine learning model using the one or more data values associated with the data indicated by the first set of location indices can involve using the other data values of age and education level that are associated with the individual John Doe by being related to the same entity (e.g., the data values from other data categories that are related to the name John Doe in the name category). In one or more examples, the instructions may instruct the first and/or second satellite system to train a machine learning model using all additional data that is not associated with said locations, such as using all of the data of the satellite system.

Where the second dataset of the second satellite system includes data stored according to a different data schema, utilizing data from both the first and second satellite systems enables more robust data analytics than using just data from a single satellite system. For example the first dataset of the first satellite system may include the categories "Name" "Age," and "Education Level," the second dataset of the second satellite system can include the categories of "Name," "Monthly Income," "SSN," and "College Attended." Using the method 200 for vertical federated learning described above thus enables a data scientist to perform data analytics using more data than is available in a single dataset, such as by using the data values of the categories "Name," "Age," and "Education Level" for an individual from a first dataset, and data values from the categories "Monthly Income," "SSN," and "College Attended" for the same individual from a second dataset (or from a plurality of datasets).

In one or more examples, training a machine learning model using data associated with said locations at block 210 can be performed using an iterative process involving three phases: a local training phase, an aggregation phase, and a global training phase. In the local training phase, local machine learning models can be trained on each individual satellite system using a local dataset to generate feature vectors or feature representations. The feature representations may be latent representations generated from an encoder-decoder architecture, deep stacked feature representations generated from neural networks, or one or multiple prediction labels generated from machine learning models. These feature vectors or feature representations may be referred to as update data. Optionally, a data scientist of the central authority (or the satellite system) specifies a particular type of machine learning model based on the dataset at a given satellite system. For instance, a dataset including text data may be suited to a first type of machine learning model whereas a dataset containing image data may be better suited to another type of machine learning model. In one or more examples, the central authority can transmit instructions for the local training phase to each satellite system (such as via a training pipeline). In the aggregation phase, the feature vectors or feature representations, which may be referred to as update data, which are generated based on the local training phase at the satellite systems, can be transmitted to the central authority and aggregated into a global model. When transmitting feature vectors to the central authority, the respective satellite system may encrypt the data such that only encrypted data is being transmitted to the central authority. Optionally, only a portion of the data records, such as only 1%, 5%, 10%, etc., of the feature vectors, are transmitted to and aggregated at the central authority. In the global training phase, the global model can be trained at the central authority by combining the feature vectors from various satellite systems. For example, the global model can be trained to learn across dataset feature correlations and patterns to maximize the accuracy of the model. In embodiments in which the global model is trained using supervised learning, target variables may be transmitted from respective satellite systems to the central authority, and the target variables may be used global training. After training the global model, the trained global model can be used to run predictions. A number of data records may be converted to feature vectors and then imported to the central authority and used by the global model to generate predictions. For instance, a particular global model may be designed to determine whether transaction is fraudulent or not, after generating the global model, the global model can then be used to predict whether a given transaction associated with data from the satellite systems is fraud or not. Exemplary machine learning models that can be used in the local training phase and/or the global training phase include neural networks, clustering, encoder-decoder models, decision trees, random forests, etc.

In one or more examples, training a machine learning model can involve learning from deep feature representations. Deep feature representations can be utilized to describe the data in a dataset according to a logical mathematical pattern that protects the actual data values and makes those data values difficult or impossible to decrypt. For example, a data record may contain a name, salary, age, and currency, with respective data values for each category. In deep feature representation, those data values for each category can be represented numerically by a sequence of real numbers. In the local training phase, local neural networks can be trained using the entire dataset at each satellite system. An alignment routine may be executed to ensure that all relevant target variables (e.g., relevant data values) are present in the datasets of the satellite systems. In the aggregation phase, a small fraction of aligned data values can be selected from each satellite system and forward propagated through the corresponding locally trained neural network models to generate feature maps. The feature maps from each satellite system can then be communicated to a central authority for global training. In the global training phase, the aggregated feature maps from the satellite systems can be concatenated, and a global neural network can be trained on the concatenated feature maps. The global neural network model learns from the representations using a small fraction of the data from the satellite systems. The globally trained model and the locally trained models from the satellite systems can be stacked and served. That is, the globally trained model and one or multiple locally trained models can be "stacked," such that the predictions from those models can be combined and used to generate predictions based on incoming data (e.g., newly added data in the datasets of the satellite systems) in real time.

Training the machine learning model may involve improving predictions by stacking. Stacking generally involves combining the predictions from multiple models and comparing those predictions to generate a relative weighting based on the trustworthiness of the models' predictions compared to one another. Stacking may be an effective training methodology when two groups of satellite systems are involved, such as where the machine learning models are locally trained on a first group of satellite systems containing target variables and data from a second group of satellite systems is used to train an encoder-decoder type of neural network model. In the local training phase for the first group of satellite systems, any kind of machine learning model may be trained using the target variables of the first group of satellite systems. After this local training phase, the predictions generated using a fraction of the aligned data (e.g., the data values identified as corresponding to data values of another dataset at another satellite system) may be communicated to a central authority. In the local training phase for the second group of satellite systems, encoder-decoder models can be trained locally on each satellite system of the second group using the entire dataset of the respective satellite system. After the local encoder-decoder model training, the encoder portion of the model can be separated and used to encode a fraction of the aligned data values (e.g., the data values identified as corresponding to data values of another dataset at another satellite system) from each satellite system of the second group. In the aggregation phase, a small fraction of the aligned data values from the datasets of the satellite systems may be selected, and the data aggregated can include the target variables, the prediction outputs from the locally trained models of the first group of satellite systems, and/or the encoded data values from the second group of satellite systems. The aligned data values may be selected based on a criteria determined by a user. The prediction outputs and the encoded data values may then be concatenated and used for global training. During the global training phase, any kind of machine learning model can be utilized.

Training the machine learning model may involve training using generative networks. During the local training phase, a clustering model can be trained locally on each satellite system. An alignment routine can then be implemented to map out cluster labels across satellite systems. The cluster labels can be generated on the satellite system with the most information (e.g., the greatest number of columns). The cluster labels can be transferred to other satellite systems based on the alignment routine. Generative network models (GANs) can then be locally trained using the datasets of the satellite systems and the cluster labels. The locally trained GANs can be communicated to the central authority, which can synthetically generate data. During the aggregation phase, the locally trained GANs and the cluster labels can be aggregated at the central authority. During the global training phase, the central authority can generate local samples from the GAN corresponding to each satellite system. The cluster labels can be used to appropriately concatenate the local samples, and a global machine learning model can be trained using the concatenated local samples. The cluster labels act as the identifiers that are used to align the data from multiple satellite systems generated by the GAN model. In each satellite system, there may be a few columns of data that remain available for local training. The GAN models from other satellite systems can be used to generate some synthetic data for the non-existing columns. This synthetic data can be aligned with the real data in the satellite system based on the cluster labels and essentials used in an imputer to fill all of the columns.

Training the machine learning model may involve training using imputing methods. During the local training phase, an imputer algorithm can be executed to generate synthetic data for each satellite system and to generate cluster labels. For instance, U.S. Application No. 63/374,984, which is hereby incorporated by reference, describes various methods for federated machine learning in a privacy-preserving manner that include transmitting a synthetic data generation pipeline to a plurality of satellite systems that includes instructions to generate synthetic data samples based on actual data of the satellite system. The local imputer models (comprising synthetic data) can then be distributed to other satellite systems. The aggregation phase can be optional when utilizing this methodology. During the global training phase, each satellite system utilizes the imputer models from the other satellite systems to generate the missing features in a single global model (e.g., to populate data values for the other satellite systems). The global model can be trained using the union of all of the synthetic data values of the satellite systems.

Whereas the individual models trained locally at the satellite systems are trained only using local data, the global model aggregates those models together into one larger model. Using a larger model that aggregates data from multiple satellite systems can result with a more robust and accurate model. Accordingly, training a machine learning model according to the method 200 disclosed herein combines insights from multiple distinct data sources in a privacy-conscious manner to build a model with improved performance relative to only locally-trained models. In one or more examples, models can be trained distributively, with an aggregation phase executed each time the models are communicated to or from the central authority, thereby ensuring that the models are globally trained throughout the entire federated learning process.

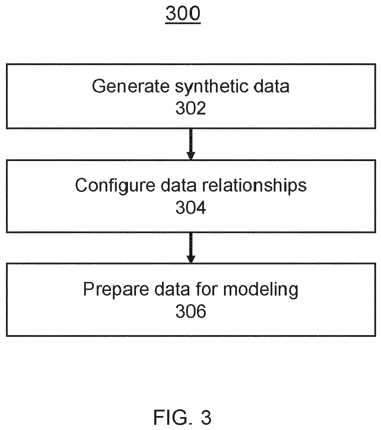

In one or more examples, prior to beginning the method 200, a data scientist at the central authority may perform a number of pre-processing steps. **FIG. 3** depicts a method 300 for processing satellite system datasets in preparation for vertical federated learning. The method 300 may be performed by a data scientist at a central authority of a system for federated machine learning, such as the central authority 102 of system 100 of FIG. 1, and may work in conjunction with a plurality of satellite systems, such as the satellite sites 108 of FIG. 1.

At block 302, in one or more examples, the data scientist can generate synthetic data at each satellite system based on data of the satellite system. When the datasets being used for vertical federated learning are private and inaccessible (e.g., are not transferred from the satellite sites to the central authority or otherwise visible to a data scientist of the central authority), the data scientist can rely instead on synthetic data that is generated based on the local dataset of each satellite site to understand what types of data categories and/or data values exist at a given satellite system. Optionally, a user at each satellite system can configure data settings of the satellite system, such as designating the maximum number of synthetic data samples that can be generated using the data of the satellite system. In one or more examples, when generating synthetic data, synthetic data values for only the data categories not containing PII are generated.

At block 304, in one or more examples, the data scientist can configure data relationships between the datasets of the satellite systems. Configuring data relationships can include specifying which categories of data of various satellite systems correspond to one another. For example, Satellite 1 may include a first data category titled "Name" and Satellite 2 may include a second data category titled "Person Name." When configuring data relationships for Satellite 1 and Satellite 2, the data scientist may configure the data relationship between these satellites such that the first data category of Satellite 1 and the second data category of Satellite 2 correspond to one another. Configuring data relationships can include any number of configuration processes such as setting network input and output sizes and ranges, input preprocessing settings and output post-processing settings, setting weight initialization settings to match input and target data, etc.

At block 306, in one or more examples, the data scientist can prepare the data of the satellite systems for modeling. Preparing the data for modelling can include sending instructions (such as a preparation pipeline) to the satellite systems that includes instructions to arrange the data of the satellite system based on the data relationship configurations generated at block 304.

In one or more examples, the data scientist can execute an SQL (Structured Query Language) query when the tables and datasets are split in multiple locations (e.g., to enable distributed SQL querying). SQL is a domain-specific language used for managing and querying relational data. More specifically, SQL enables a data scientist to query multiple datasets for relevant information that is spread across those datasets, For instance, a first dataset may contain financial information about a number of individuals, and a second dataset may contain demographic information about at least some of the same individuals as the first dataset. Executing an SQL query could thus include identifying the average income from the first dataset, for individuals from a particular country. In order to return this query, the datasets typically must be joined, so that the income values of the first dataset can be matched up based on the country of the individual tabulated in the second dataset. When executing a privacy-preserving federated learning model, however, joining the datasets is not feasible. Accordingly, executing an SQL query can include generating sub-queries that can be run individually at each satellite site. The sub-queries may be generated after identifying related data values (e.g., identifying indices of a first dataset at a first satellite site that correspond to certain indices of a second dataset at a second satellite site), and may include instructions to access data associated with the indices of the respective satellite site that were determined to correspond to another satellite site.

Executing the SQL query can involve identifying the number of satellite systems (e.g., the number of datasets), checking the validity of the query (e.g., checking for syntactic validity of the SQL, checking for schema matching among the datasets, ensuring the query reveals only aggregate information (such as a sum of values, an average of values, the number of values, but not the data values themselves), generating subqueries to be run on individual satellite systems, and/or generating a final aggregation query. This process enables both single satellite and multi-satellite SQL querying. For example, the data scientist could query just Satellite 1 to identify index locations for values above a certain threshold (such as values >21), or the data scientist can query multiple satellites to return indices from Satellite 2 that recite a certain target value and then query Satellite 3 for the values at the indices corresponding to the indices from Satellite 2 matching the target value. The system thus allows the functionality of running complex SQL queries that require joins to be performed without executing the join (which would require data centralization).

### Data Configuration

As noted above, in one or more examples a user at a satellite site can configure data settings of the satellite system. Data settings that can be configured by a user include, but are not limited to, tagging data, specifying an anonymity threshold, specifying the number of synthetic data samples that can be generated, and specifying the key length used for internal encryptions.

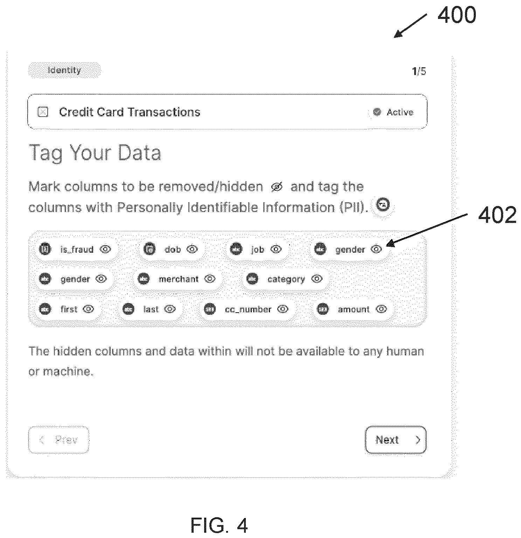

**FIG. 4** depicts a user interface screen 400 for a user of a device associated with a satellite system to privatize data associated with that satellite site. The user interface screen 400 can be displayed on a user device of the satellite system (such as the SS user device 116 of FIG. 1). The screen 400 can include a number of affordances 402 that enable the user to specify hidden data categories that should be hidden (e.g., not available to the central authority), and to tag data categories with PII.

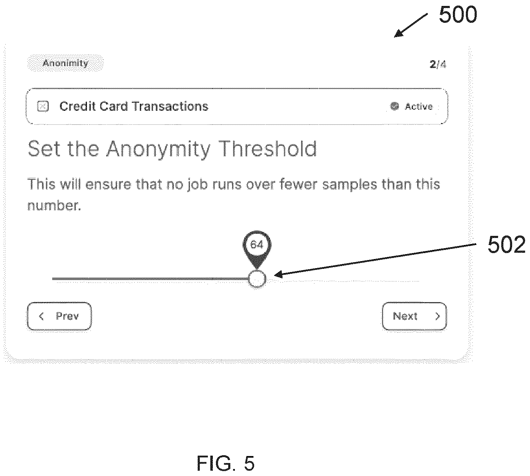

**FIG. 5** depicts a user interface screen 500 for a user of a device associated with a satellite system to anonymize data associated with that satellite system. The user interface screen 500 can be displayed on a user device of the satellite system (such as the SS user device 116 of FIG. 1). The screen 500 can include an affordance 502 that enables the user to specify the anonymity threshold of the dataset. As shown in FIG. 5, the affordance 502 is a slider that enables the user to slide the affordance 502 to select a threshold value (here between 0 and 100). The threshold value can specify the minimum number of samples that will be used by any job that utilizes the dataset of that satellite system.

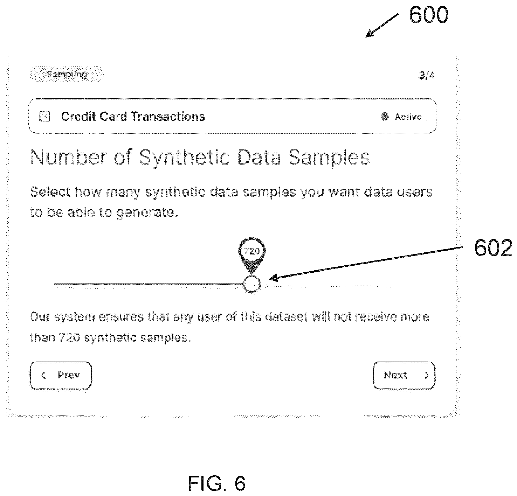

**FIG. 6** depicts a user interface screen 600 for a user of a device associated with a satellite system to manage data settings for data associated with that satellite site. The user interface screen 600 can be displayed on a user device of the satellite system (such as the SS user device 116 of FIG. 1). The screen 600 can include an affordance 602 that enables the user to specify the number of synthetic data samples that can be generated using the dataset of that satellite system. As shown in FIG. 6, the affordance 602 is a slider that enables the user to slide the affordance 602 to select a maximum number of synthetic data values that can be generated using the dataset. The range of selectable numbers (e.g., between 0 and 1000) that are available to select via the affordance 602 can be a standard range or may be based on the number of data values in the dataset.

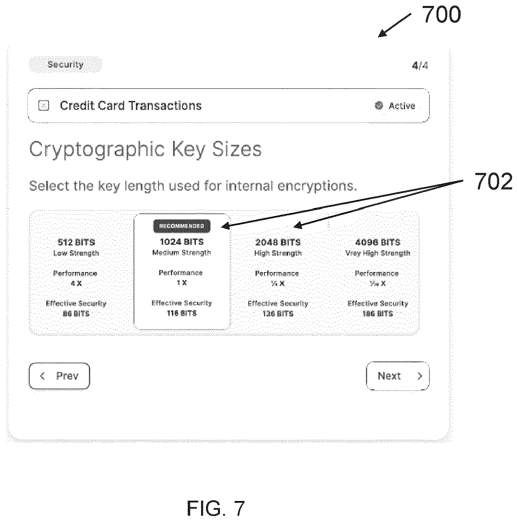

**FIG. 7** depicts a user interface screen for a user of a device associated with a satellite system to manage encryption settings for data associated with that satellite site. The user interface screen 700 can be displayed on a user device of the satellite system (such as the SS user device 116 of FIG. 1). The screen 700 includes a number of affordances 702 that enable the user to select a key length used for internal encryptions (e.g., the key length used by the satellite system to encrypt data before sending any encrypted data to the central authority). As shown, the affordances 702 are selectable icons, that enable the user to select from a number of predetermined key size options, such as 512 BITS, 1024 BITS, 2048 BITS, and 4096 BITS. A key management system may choose a key size that satisfies all satellite system preferences.

### Computing Device

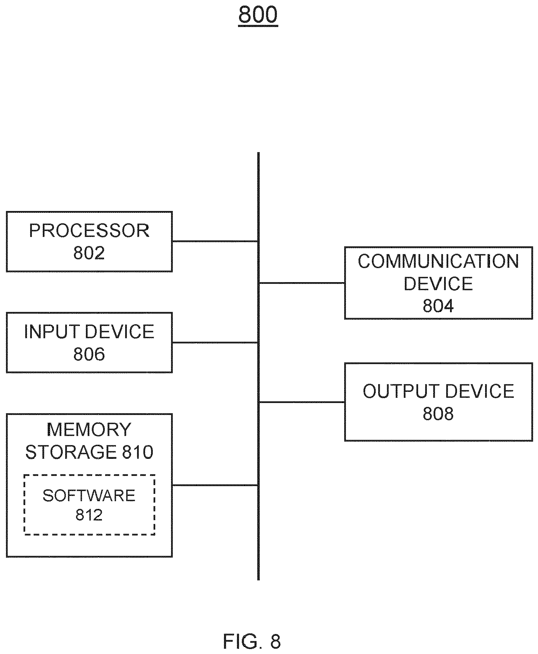

The operations described above, including those described with references to FIGS. 1-7, are optionally implemented by one or more computing systems having components depicted in FIG. 8. It would be clear to a person having ordinary skill in the art how other processes, for example, combinations or sub-combinations of all or part of the operations described above, may be implemented based on the components depicted in FIG. 8. It would also be clear to a person having ordinary skill in the art how the methods, techniques, and systems described herein may be combined with one another, in whole or in part, whether or not those methods, techniques, systems, and/or devices are implemented by and/or provided by the components depicted in FIG. 8.

**FIG. 8** depicts a computing device in accordance with some embodiments. Device 800 can be a host computer connected to a network. Device 800 can be a client computer or a server. As shown in FIG. 8, device 800 can be any suitable type of microprocessor-based device, such as a personal computer, workstation, server or handheld computing device (portable electronic device) such as a phone or tablet. The device can include, for example, one or more of processor 802, input device 806, output device 808, storage 810, and communication device 804. Input device 806 and output device 808 can generally correspond to those described above and can either be connectable or integrated with the computer.

Input device 806 can be any suitable device that provides input, such as a touch screen, keyboard or keypad, mouse, or voice-recognition device. Output device 808 can be any suitable device that provides output, such as a touch screen, haptics device, or speaker.

Storage 810 can be any suitable device that provides storage, such as an electrical, magnetic or optical memory including a RAM, cache, hard drive, or removable storage disk. Communication device 804 can include any suitable device capable of transmitting and receiving signals over a network, such as a network interface chip or device. The components of the computer can be connected in any suitable manner, such as via a physical bus or wirelessly.

Software 812, which can be stored in storage 810 and executed by processor 802, can include, for example, the programming that embodies the functionality of the present disclosure (e.g., as embodied in the devices as described above).

Software 812 can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 810, that can contain or store programming for use by or in connection with an instruction execution system, apparatus, or device.

Software 812 can also be propagated within any transport medium for use by or in connection with an instruction execution system, apparatus, or device, such as those described above, that can fetch instructions associated with the software from the instruction execution system, apparatus, or device, and execute the instructions. In the context of this disclosure, a transport medium can be any medium that can communicate, propagate or transport programming for use by or in connection with an instruction execution system, apparatus, or device. The transport readable medium can include, but is not limited to, an electronic, magnetic, optical, electromagnetic or infrared wired or wireless propagation medium.

Device 800 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

Device 800 can implement any operating system suitable for operating on the network. Software 812 can be written in any suitable programming language, such as C, C++, Java, or Python. In various embodiments, application software embodying the functionality of the present disclosure can be deployed in different configurations, such as in client/server arrangement or through a Web browser as a Web-based application or Web service, for example.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Alternative statements of the inventive concept are set out in the following numbered clauses:

    1. A computer-implemented method for vertical federated machine learning, the method performed by a central system communicatively coupled to a plurality of satellite systems, the method comprising:

    receiving, at the central system, first encrypted data based on a first dataset, wherein the first dataset is at a first satellite system;
    receiving, at the central system, second encrypted data based on a second dataset, wherein the second dataset is at a second satellite system;
    applying a first transformation to the first encrypted data to generate first transformed data;
    applying a second transformation to the second encrypted data to generate second transformed data;
    identifying one or more matching values in the first and second transformed data;
    generating a first set of location indices indicating one or more matching values in the first transformed data;
    generating a second set of location indices indicating one or more matching values in the second transformed data;
    transmitting instructions to the first satellite system to train a first local machine learning model using data of the first dataset that is associated with the first set of location indices; and
    transmitting instructions to the second satellite system to train a second local machine learning model using data of the second dataset that is associated with the second set of location indices.

    2. The method of clause 1, comprising:

    receiving, at the central system, first update data from the first satellite system and second update data from the second satellite system; and
    training a global model using the first update data and the second update data.

    3. The method of clause 2, comprising executing the global model to generate one or more predictions.

    4. The method of clause 3, wherein the one or more predictions are generated in real time as new data is added to one or more of the first dataset and the second dataset.

    5. The method of any of clauses 2-4, wherein global model is trained using one of a neural network model, a clustering model, an encoder-decoder model, a decision tree model, a random forests model, a supervised machine learning model, and an unsupervised machine learning model.

    6. The method of any of clauses 2-5, wherein the first update data and the second update data are based on the first local machine learning model trained at the first satellite system and the second local machine learning model trained at the second satellite system, respectively.

7. The method of clause 6, wherein the first update data corresponds to a portion of data values of the first dataset that were trained using the first local machine learning model.

8. The method of any of clauses 6-7, wherein the first update data and the second update data comprise encrypted data values.

9. The method of any of clauses 1-8, wherein the instructions transmitted to the first satellite system and the second satellite system comprise instructions to train each of the first local machine learning model and the second local machine learning model using one or more data values stored at the locations in the first dataset and the second dataset that are indicated by the first set of location indices and the second set of location indices, respectively.

10. The method of any of clauses 1-9, wherein the instructions transmitted to the first satellite system and the second satellite system comprise instructions to train each of the first local machine learning model and the second local machine learning model using one or more data values that are related to the data stored at the locations in the first dataset and the second dataset indicated by the first set of location indices and the second set of location indices, respectively.

11. The method of any of clauses 1-10, wherein the instructions transmitted to the first satellite system and the second satellite system comprise instructions to train each of the first local machine learning model and the second local machine learning model using one of a neural network model, a clustering model, an encoder-decoder model, a decision tree model, and a random forests model.

12. The method of any of clauses 1-11, wherein the first encrypted data corresponds to one or more data categories of the first dataset that contain personally identifying information (PII).

13. The method of any of clauses 1-12, wherein the first encrypted data corresponds to one or more unique data categories of the first dataset that contain information that identifies a corresponding one or more entities of the first dataset.

14. The method of any of clauses 1-13, wherein the first dataset and the second dataset comprise one or more of financial data, medical data, and biographical data.

15. The method of any of clauses 1-14, wherein the first dataset and the second dataset store data according to different data schemas.

16. The method of any of clauses 1-15, wherein the first dataset and the second dataset store data in one or more tables.

17. The method of any of clauses 1-16, wherein applying the first transformation to the first encrypted data comprises applying a first transformation key to the first encrypted data, and wherein the first transformation key comprises a private random value known to a key management system and a random value corresponding to the first satellite system.

18. The method of clause 17, wherein applying the second transformation to the second encrypted data comprises applying a second transformation key to the second encrypted data, and wherein the second transformation key comprises the private random value and a random value corresponding to the second satellite system.

19. The method of clause 18, wherein the first transformation key and the second transformation key transform the first encrypted data and second encrypted data according to a deterministic encryption scheme.

20. The method of any of clauses 17-19, wherein the first transformation key comprises an additive nonce that is added to data values of the first encrypted data.

21. The method of any of clauses 1-20, wherein the first encrypted data is encrypted using a pseudorandom generator.

22. A computing system for vertical federated machine learning, the system comprising:

a central system communicatively coupled to a plurality of satellite systems; and
one or more processors coupled to one or more memory devices, wherein the one or more memory devices include instructions which when executed by the one or more processors cause the system to:

receive, at the central system, first encrypted data based on a first dataset, wherein the first dataset is at a first satellite system;
receive, at the central system, second encrypted data based on a second dataset, wherein the second dataset is at a second satellite system;
apply a first transformation to the first encrypted data to generate first transformed data;
apply a second transformation to the second encrypted data to generate second transformed data;
identify one or more matching values in the first and second transformed data;
generate a first set of location indices indicating one or more matching values in the first transformed data;
generate a second set of location indices indicating one or more matching values in the second transformed data;
transmit instructions to the first satellite system to train a first local machine learning model using data of the first dataset that is associated with the first set of location indices; and
transmit instructions to the second satellite system to train a second local machine learning model using data of the second dataset that is associated with the second set of location indices.

23. A computer-readable medium that stores instructions for vertical federated machine learning that, when executed by a computing system, cause the system to:

receive, at a central system of the computing system, first encrypted data based on a first dataset, wherein the first dataset is at a first satellite system;
receive, at the central system, second encrypted data based on a second dataset, wherein the second dataset is at a second satellite system;
apply a first transformation to the first encrypted data to generate first transformed data;
apply a second transformation to the second encrypted data to generate second transformed data;
identify one or more matching values in the first and second transformed data;
generate a first set of location indices indicating one or more matching values in the first transformed data;
generate a second set of location indices indicating one or more matching values in the second transformed data;
transmit instructions to the first satellite system to train a first local machine learning model using data of the first dataset that is associated with the first set of location indices; and transmit instructions to the second satellite system to train a second local machine learning model using data of the second dataset that is associated with the second set of location indices.

**Claims**

1. A computer-implemented method for vertical federated machine learning, the method performed by a central system communicatively coupled to a plurality of satellite systems, the method comprising:

receiving, at the central system, first encrypted data based on a first dataset, wherein the first dataset is at a first satellite system;
receiving, at the central system, second encrypted data based on a second dataset, wherein the second dataset is at a second satellite system;
applying a first transformation to the first encrypted data to generate first transformed data;

applying a second transformation to the second encrypted data to generate second transformed data;
identifying one or more matching values in the first and second transformed data;
generating a first set of location indices indicating one or more matching values in the first transformed data;
generating a second set of location indices indicating one or more matching values in the second transformed data;
transmitting instructions to the first satellite system to train a first local machine learning model using data of the first dataset that is associated with the first set of location indices; and
transmitting instructions to the second satellite system to train a second local machine learning model using data of the second dataset that is associated with the second set of location indices.

2. The method of claim 1, comprising:

receiving, at the central system, first update data from the first satellite system and second update data from the second satellite system; and
training a global model using the first update data and the second update data.

3. The method of claim 2, comprising executing the global model to generate one or more predictions, optionally wherein the one or more predictions are generated in real time as new data is added to one or more of the first dataset and the second dataset.

4. The method of any of claims 2-3, wherein global model is trained using one of a neural network model, a clustering model, an encoder-decoder model, a decision tree model, a random forests model, a supervised machine learning model, and an unsupervised machine learning model.

5. The method of any of claims 2-4, wherein the first update data and the second update data are based on the first local machine learning model trained at the first satellite system and the second local machine learning model trained at the second satellite system, respectively.

6. The method of claim 5, wherein the first update data corresponds to a portion of data values of the first dataset that were trained using the first local machine learning model.

7. The method of any of claims 5-6, wherein the first update data and the second update data comprise encrypted data values.

8. The method of any of claims 1-7, wherein the instructions transmitted to the first satellite system and the second satellite system comprise instructions: to train each of the first local machine learning model and the second local machine learning model using one or more data values stored at the locations in the first dataset and the second dataset that are indicated by the first set of location indices and the second set of location indices, respectively; and/or to train each of the first local machine learning model and the second local machine learning model using one or more data values that are related to the data stored at the locations in the first dataset and the second dataset indicated by the first set of location indices and the second set of location indices, respectively.

9. The method of any of claims 1-8, wherein the instructions transmitted to the first satellite system and the second satellite system comprise instructions to train each of the first local machine learning model and the second local machine learning model using one of a neural network model, a clustering model, an encoder-decoder model, a decision tree model, and a random forests model.

10. The method of any of claims 1-9, wherein the first encrypted data corresponds to one or more data categories of the first dataset that contain personally identifying information (PII), and/or wherein the first encrypted data corresponds to one or more unique data categories of the first dataset that contain information that identifies a corresponding one or more entities of the first dataset, and/or wherein the first encrypted data is encrypted using a pseudorandom generator.

11. The method of any of claims 1-10, wherein the first dataset and the second dataset comprise one or more of financial data, medical data, and biographical data, and/or wherein the first dataset and the second dataset store data according to different data schemas, and/or wherein the first dataset and the second dataset store data in one or more tables.

12. The method of any of claims 1-11, wherein applying the first transformation to the first encrypted data comprises applying a first transformation key to the first encrypted data, and wherein the first transformation key comprises a private random value known to a key management system and a random value corresponding to the first satellite system, optionally wherein applying the second transformation to the second encrypted data comprises applying a second transformation key to the second encrypted data, and wherein the second transformation key comprises the private random value and a random value corresponding to the second satellite system.

13. The method of claim 12, wherein the first transformation key and the second transformation key transform the first encrypted data and second encrypted data according to a deterministic encryption scheme, and/or wherein the first transformation key comprises an additive nonce that is added to data values of the first encrypted data.

14. A computing system for vertical federated machine learning, the system comprising:

a central system communicatively coupled to a plurality of satellite systems; and one or more processors coupled to one or more memory devices, wherein the one or more memory devices include instructions which when executed by the one or more processors cause the system to perform the method of any preceding claim.

15. A computer-readable medium that stores instructions for vertical federated machine learning that, when executed by a computing system, cause the system to perform the method of any of claims 1 to 13.

CENTRAL AUTHORITY — 102

104 → ARTIFACT DATABASE

KEY MANAGEMENT SYSTEM — 114

CA SERVER — 106

100

SATELLITE SITES — 108

SS USER DEVICE — 116

110 → LOCAL DATABASE

SS COMPUTING DEVICE — 112

FIG. 1

<u>200</u>

Receive first encrypted dataset based on first dataset at first
satellite system and second encrypted dataset based on
second dataset at second satellite system
202

Transform the first and second encrypted datasets to
generate first and second transformed data
204

Identify matching entities in first and second transformed data
206

Generate a first set of location indices indicating location of
the matching entities in the first transformed data and a
second set of location indices indicating location of the
matching entities in in the second transformed data
208

Transmit instructions to the first and second satellite systems
to access data stored at locations indicated by the first and
second set of location indices and to train a machine learning
model using data associated with said locations
210

FIG. 2

300

```
┌─────────────────────────────────┐
│      Generate synthetic data    │
│              302                │
└─────────────────────────────────┘
                 │
                 ▼
┌─────────────────────────────────┐
│    Configure data relationships │
│              304                │
└─────────────────────────────────┘
                 │
                 ▼
┌─────────────────────────────────┐
│      Prepare data for modeling  │
│              306                │
└─────────────────────────────────┘
```

FIG. 3

400

⊠  Credit Card Transactions                    ● Active

# Tag Your Data

Mark columns to be removed/hidden ⊘ and tag the
columns with Personally Identifiable Information (PII). ☺

402

| ● is_fraud ◎ | ● dob ◎ | ● job ◎ | ● gender ◎ |
| ● gender ◎ | ● merchant ◎ | ● category ◎ | |
| ● first ◎ | ● last ◎ | ● cc_number ◎ | ● amount ◎ |

The hidden columns and data within will not be available to any human
or machine.

⟨ Prev                                         Next ⟩

FIG. 4

500

Anonimity                                          2/4

☐ Credit Card Transactions                    ◉ Active

Set the Anonymity Threshold

This will ensure that no job runs over fewer samples than this
number.

64

502

‹ Prev                                          Next ›

FIG. 5

600

FIG. 6

700

☐ Credit Card Transactions                                    ● Active

# Cryptographic Key Sizes

Select the key length used for internal encryptions.

702

| | **RECOMMENDED** | | |
|---|---|---|---|
| **512 BITS** | **1024 BITS** | **2048 BITS** | **4096 BITS** |
| Low Strength | Medium Strength | High Strength | Vrey High Strength |
| Performance | Performance | Performance | Performance |
| 4 X | 1 X | ¼ X | ⅛ X |
| Effective Security | Effective Security | Effective Security | Effective Security |
| 86 BITS | 116 BITS | 136 BITS | 186 BITS |

< Prev                                                            Next >

FIG. 7

<u>800</u>

FIG. 8

Europäisches
Patentamt

European
Patent Office

Office européen
des brevets

# EUROPEAN SEARCH REPORT

Application Number

EP 23 19 0910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Burkhalter Lukas ET AL: "RoFL: Attestable Robustness for Secure Federated Learning", , 3 February 2022 (2022-02-03), XP093117705, Retrieved from the Internet: URL:https://arxiv.org/pdf/2107.03311v3.pdf [retrieved on 2024-01-10] * abstract * * page 2 – page 4 * * page 7 – page 14 * * page 17 – page 21 * ----- | 1-15 | INV. G06N3/098 G06N3/02 G06N20/00 ADD. G06F21/60 |
| L | Li Chunyuan ET AL: "Measuring the intrinsic dimension of objective landscapes", arXiv (Cornell University), 24 April 2018 (2018-04-24), XP093117834, Ithaca DOI: 10.48550/arXiv.1804.08838 Retrieved from the Internet: URL:https://arxiv.org/pdf/1804.08838.pdf [retrieved on 2024-01-10] * abstract * * page 2 – page 9 * ----- | 1-15 | |
| A | LIU YIRAN ET AL: "Distributed Fog Computing and Federated-Learning-Enabled Secure Aggregation for IoT Devices", IEEE INTERNET OF THINGS JOURNAL, IEEE, vol. 9, no. 21, 18 May 2022 (2022-05-18), pages 21025-21037, XP011924901, DOI: 10.1109/JIOT.2022.3176305 [retrieved on 2022-05-19] * the whole document * ----- | 1-15 | |

TECHNICAL FIELDS SEARCHED (IPC)

G06N
G06F

The present search report has been drawn up for all claims

| Place of search | Date of completion of the search | Examiner |
|---|---|---|
| The Hague | 10 January 2024 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63371334
- US 63375984
- US 19158323
- US 63374984